# EUROPEAN PATENT SPECIFICATION

(11) **EP 3 698 984 B1**
(45) Date of publication and mention of the grant of the patent: **02.06.2021**
(21) Application number: 20154830.2
(22) Date of filing: 31.01.2020
(51) Int. Cl.: B60C 11/03, B60C 11/16

(54) **STUDDABLE TIRE**
MIT SPIKES BESTÜCKBARER REIFEN
PNEUMATIQUE POUVANT ÊTRE DOTÉ DE CRAMPONS

(30) Priority: 20.02.2019 JP 2019028731
(43) Date of publication of application: 26.08.2020
(73) Proprietor: Sumitomo Rubber Industries, Ltd., Kobe-shi, Hyogo-ken 651-0072 (JP)
(72) Inventor: ABE, Shotaro, Kobe-shi, Hyogo 651-0072 (JP); ISHINO, Hiroyuki, Kobe-shi, Hyogo 651-0072 (JP)
(74) Representative: Manitz Finsterwald Patent- und Rechtsanwaltspartnerschaft mbB

(56) References cited:
- EP-A1- 3 081 400
- EP-A1- 3 222 441
- EP-A1- 3 375 644

## Description

### BACKGROUND OF THE INVENTION

### Field of the Invention

The present invention relates to a studdable tire.

### Description of the Background Art

A studdable tire has been developed as a tire that exhibits excellent running performance on ice. Japanese Patent No. 6336409 discloses a winter tire used as a studdable tire. The tread portion has a plurality of blocks, and at least one of the blocks has a hole in which a stud pin is fixed.

EP 3 222 441 A1 and EP 3 375 644 A1 disclose a studdable tire according to the preamble of claim 1. EP 3 081 400 A1 discloses a winter tire provided with stud pins that are mounted to triangular blocks arranged at a tread part of the tire.

A stud pin is typically press-fitted into a hole formed in a block. That is, the stud pin is pushed into the hole at a high force and is thus mounted while pressing and widening the hole. Meanwhile, rubber is non-compressive, and the rubber volume (interference) that has been pressed and retracted by the stud pin expands so as to narrow a surrounding groove, so that the groove volume is reduced. Reduction of the groove volume causes a problem that snow column shear force is reduced, and, consequently, on-snow performance is degraded.

The present invention has been made in view of the aforementioned circumstances, and a main object of the present invention is to provide a studdable tire that can exhibit excellent on-snow performance as well as on-ice performance.

### SUMMARY OF THE INVENTION

The present invention is directed to a studdable tire that includes: a stud; and a tread portion to which the stud is mounted. The tread portion has a designated rotation direction. The tread portion includes a plurality of blocks. The plurality of blocks each include a corner portion that projects forward in the rotation direction. The stud is mounted to at least one of the plurality of blocks. The stud includes a body embedded in the block and a pin portion that projects from the body in a tire radial direction. The body has a top flange formed in an outer side portion in the tire radial direction. The top flange includes a tapered portion in a planar view. The stud is mounted to the block such that the tapered portion and the corner portion are oriented in the same direction. In a planar view of the tread portion, an area centroid of the top flange of the stud is disposed so as to be distant from an end portion of the corner portion by 15 mm or less in a tire circumferential direction.

In another aspect of the present invention, the top flange may include a first side that linearly extends in a planar view, and the tapered portion may have a length, along the first side, which is reduced in a direction orthogonal to the first side.

In another aspect of the present invention, the corner portion may have an obtuse angle.

In another aspect of the present invention, the block may be a crown block disposed in a region that includes a tire equator at a center of the region and that extends over a distance corresponding to 40% of a tread width.

In another aspect of the present invention, the block may be a shoulder block disposed in a region that extends from a tread end over a distance corresponding to 30% of the tread width.

In another aspect of the present invention, the tread portion may include a first tread end and a second tread end. The tread portion may have a plurality of tilted grooves formed therein. The plurality of tilted grooves may include: a first tilted groove which extends, from an open end that connects to the first tread end, beyond the tire equator, and has a disconnecting end before the second tread end; and a second tilted groove which extends, from an open end that connects to the second tread end, beyond the tire equator, and has a disconnecting end before the first tread end. Each of the first tilted groove and the second tilted groove may include: a first steeply-tilted portion, on the open end side, which is tilted relative to a tire axial direction; a second steeply-tilted portion, on the disconnecting end side, which is tilted relative to the tire axial direction; and a gently-tilted portion which is tilted relative to the tire axial direction between the first steeply-tilted portion and the second steeply-tilted portion.

In another aspect of the present invention, the second steeply-tilted portion may have a portion having an angle, relative to a tire circumferential direction, which is gradually reduced toward the disconnecting end.

In another aspect of the present invention, the tread portion may include a plurality of the first tilted grooves and a plurality of the second tilted grooves. Each of the plurality of the first tilted grooves may intersect two or more of the tilted grooves between the tire equator and the second tread end.

In another aspect of the present invention, each of the plurality of the second tilted grooves may intersect two or more of the tilted grooves between the tire equator and the first tread end.

In another aspect of the present invention, the gently-tilted portion of the first tilted groove may have an angle, relative to the tire axial direction, which is gradually reduced toward the second tread end. The gently-tilted portion of the second tilted groove may have an angle, relative to the tire axial direction, which is gradually reduced toward the first tread end.

In another aspect of the present invention, the first steeply-tilted portion may be curved so as to project toward one side in the tire circumferential direction. The gently-tilted portion may be curved so as to project toward the other side in the tire circumferential direction.

In another aspect of the present invention, in a planar view of the tread portion, an area centroid of the top flange of the stud may be disposed so as to be distant from the end portion of the corner portion by 5 mm or less in the tire axial direction.

The studdable tire of the present invention can exhibit excellent on-ice performance since the tread portion has the stud mounted thereto.

The tread portion includes a plurality of blocks, and each block includes the corner portion that projects forward in the rotation direction. The corner portion having such a structure divides snow in the leftward direction and the rightward direction during running on a snow road, and a snow column shear force can be generated on each of the sides. Therefore, the studdable tire of the present invention can exhibit excellent on-snow performance.

Furthermore, the top flange of the stud includes a tapered portion in a planar view, and the stud is mounted to the block such that the tapered portion and the corner portion of the block are oriented in the same direction. Thus, by the corner portion of the block and the tapered portion of the top flange being oriented in the same direction, rubber of the block is inhibited from greatly expanding locally into the grooves around the block when the stud is mounted to the block, so that reduction of a snow column shear force can be also inhibited. Therefore, the studdable tire of the present invention can exhibit excellent on-snow performance as well as on-ice performance.

### BRIEF DESCRIPTION OF THE DRAWINGS

FIG. 1 is a partial plan view of a tread portion according to one embodiment of the present invention;
FIG. 2 is a perspective view of a stud according to one embodiment;
FIG. 3 is a plan view of the stud shown in FIG. 2;
FIG. 4 is a side view of the stud shown in FIG. 2;
FIG. 5 is a cross-sectional view of a hole formed in the tread portion;
FIG. 6 is a partial enlarged view of a corner portion of a block;
FIG. 7 is a development of a tread portion of a tire according to one embodiment of the present invention;
FIG. 8 is an enlarged view of an outline of a first tilted groove shown in FIG. 7; and
FIG. 9 is an enlarged view of a main portion shown in FIG. 7.

### DESCRIPTION OF THE PREFERRED EMBODIMENTS

An embodiment of the present invention will be described below with reference to the drawings.

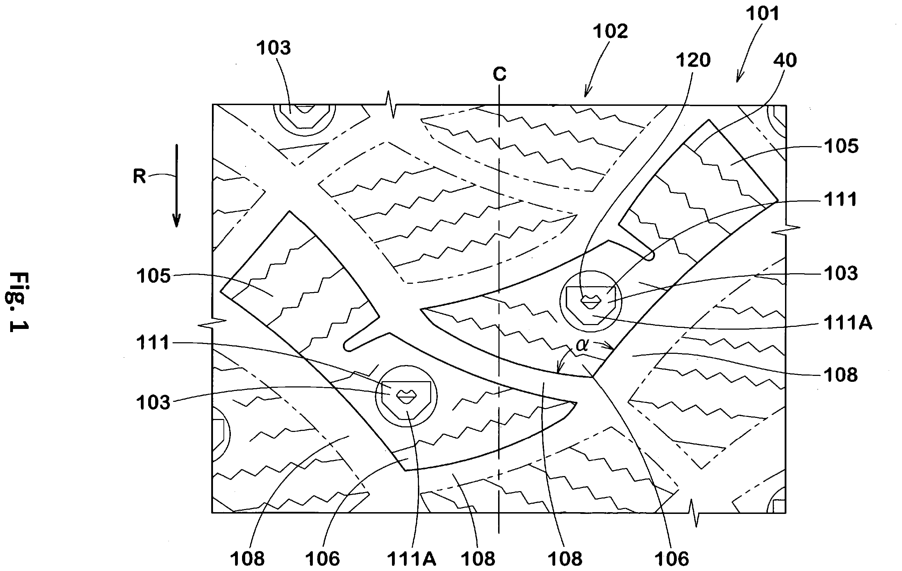

FIG. 1 is an enlarged view of a main portion of a tread portion 102 of a studdable tire (hereinafter, may be simply referred to as "tire") 101 according to one embodiment of the present invention. The tire 101 has a plurality of studs 103 mounted to the tread portion 102. Each stud 103 is formed from a material harder than the tread portion 102 formed from rubber. A part of the stud 103 can come into contact with the ground during running. Therefore, the tire 101 allows high friction against a road surface to be generated by, for example, the studs 103 entering a road surface, thereby exhibiting excellent on-ice performance.

The tread portion 102 has a designated rotation direction R. For example, the rotation direction R is determined such that the tread portion 102 and/or the studs 103 allow the tire 101 to enhance running performance. In other words, the pattern of the tread portion 102 and/or the studs 103 are preferably structured to exhibit optimal performance by the tread portion 102 and/or the studs 103 rotating in the rotation direction R and coming into contact with a road surface. The rotation direction R may be indicated, for example, on a sidewall portion (not shown) of the tire 101.

The tread portion 102 has a plurality of blocks 105 formed therein. Each block 105 includes a corner portion 106 that projects forward in the rotation direction R. In the present embodiment, the corner portion 106 is formed so as to come into contact with the ground earliest in the block 105 when the tire 101 rotates in the rotation direction R. In a preferable mode, the corner portion 106 is formed so as to have a width, in the tire axial direction, which is reduced forward in the rotation direction R. Therefore, high contact pressure acts on the corner portion 106 in the block 105 during running with the tire. Furthermore, it is needless to say that grooves 108 are formed on both sides of the corner portion 106 in the tire axial direction.

The corner portion 106 can divide snow in the leftward direction and the rightward direction during running on a snow road to guide the snow into the grooves 108 on both the sides. The snow having been guided into the grooves 108 on both the sides of the corner portion 106 in the tire axial direction are trodden by the tire 101 being further rotated. Thereafter, when the tire 101 is further rotated, a snow column in the groove 108 is sheared by the block 105, and a snow column shear force that is a reaction force at that time causes traction and braking forces to be generated in the tire 101. Therefore, the tire 101 of the present embodiment generates a snow column shear force on both the sides of the corner portion 106, thereby exhibiting excellent on-snow performance.

In a preferable mode, the corner portion 106 may be formed so as to have an obtuse angle, i.e., an angle α that is greater than 90 degrees and less than 180 degrees. Thus, a snow column shear force is enhanced in the tire circumferential direction, and traction and braking forces during straight running are further enhanced. In a particularly preferable mode, the corner portion 106 may be formed so as to have the angle α of 100 to 140 degrees.

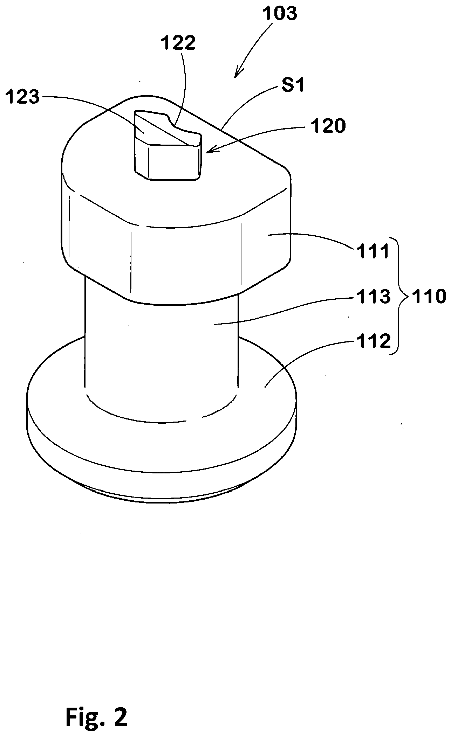

The stud 103 is mounted to at least one of the plurality of blocks 105. FIG. 2, FIG. 3, and FIG. 4 are a perspective view, a plan view, and a side view, respectively, of the stud 103 which has not been mounted to the tread portion 102. As shown in FIGS. 2 to 4, the stud 103 includes a body 110 and a pin portion 120.

The body 110 is embedded in the block 105. The body 110 has a shaft-like shape as a whole, and includes, for example, a top flange 111. In the present embodiment, the top flange 111 forms the outer side portion of the body 110 in the tire radial direction. Therefore, when the stud 103 is mounted to the tire 101, the top flange 111 is exposed, for example, on the tread surface (see FIG. 1).

In the present embodiment, the top flange 111 has a polygonal shape in a planar view. In the description herein, examples of the polygonal shape include not only a shape in which straight line sides directly intersect each other to form a corner but also a shape in which the corner is rounded to form an arc (however, the entire shape is not a complete circle). Examples of the polygonal shape include a triangular shape, a pentagonal shape, and a hexagonal shape. The top flange 111 has, for example, a first side S1 that extends almost straight. The first side S1 may have, for example, the greatest length L1 in the top flange 111. The length L1 is, for example, not greater than 10 mm.

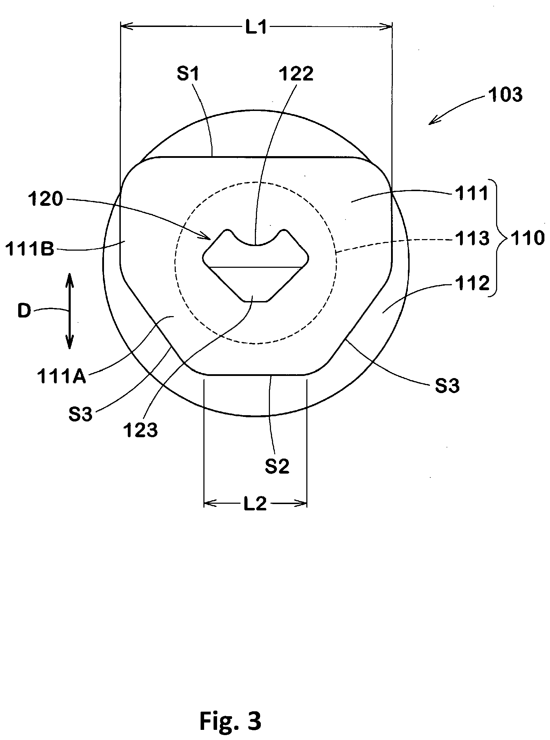

As shown in FIG. 3, the top flange 111 includes a tapered portion 111A in a planar view. At the tapered portion 111A, for example, the length along the first side S1 is gradually reduced in the direction (hereinafter, referred to as "first direction D") orthogonal to the first side S1. The tapered portion 111A of the present embodiment terminates so as to from a second side S2 having a length L2 at a position opposing the first side S1. Diagonal sides S3 and S3 are formed on both sides of the second side S2. A taper angle formed by the diagonal sides S3 and S3 is, for example, an obtuse angle, and is preferably 100 to 140 degrees.

The top flange 111 may further include a portion that extends continuously with the length L1 in the first direction D, between the tapered portion 111A and the first side S1.

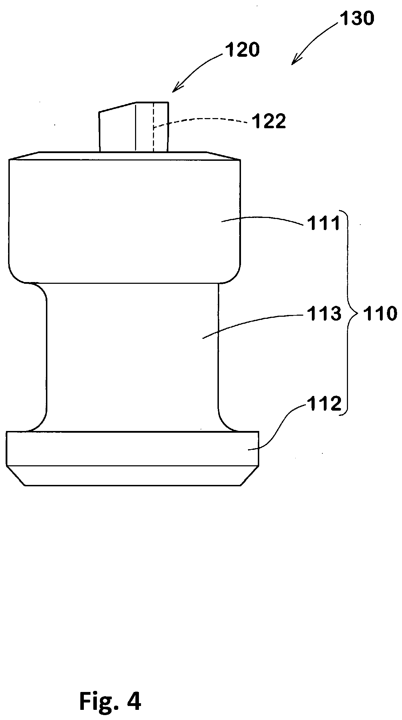

As shown in FIG. 2 and FIG. 4, in a preferable mode, the body 110 may further include a bottom flange 112 that forms the inner side end portion of the body 110 in the tire radial direction, and a neck portion 113 disposed between the bottom flange 112 and the top flange 111. The neck portion 113 has an outer diameter less than each of the top flange 111 and the bottom flange 112.

The pin portion 120 is a relatively small projection that projects from the body 110 (more specifically, from the top flange 111) in the tire radial direction. The pin portion 120 mainly allows high friction against a road surface to be generated by coming into contact with the road surface. Various shapes can be used for the pin portion 120.

In the present embodiment, the pin portion 120 may include a recess 122 that is recessed toward the pin inner side in a planar view, as shown in FIG. 3. The recess 122 forms, for example, a groove that extends in the tire radial direction in the pin portion 120, and promotes pressing of the pin portion 120 into a road surface, thereby allowing high friction against the road surface to be further enhanced.

The pin portion 120 may include a projection 123 in which the length orthogonal to the first direction D is reduced in the first direction D in a planar view shown in FIG. 3. The projection 123 is preferably formed on the side opposite to the recess 122 side in the first direction D. The projection 123 having such a structure also promotes pressing of the pin portion 120 into a road surface, thereby contributing to generation of a more high-friction contact state.

The material of the stud 103 is not particularly limited as long as the stud 103 is formed from a material harder than rubber. However, the stud 103 is preferably formed from a metal material. In another mode, the stud 103 may be formed from a resin or a rubber material harder than rubber of the tread portion 102. Furthermore, in the stud 103, for example, the material of the body 110 may be different from the material of the pin portion 120.

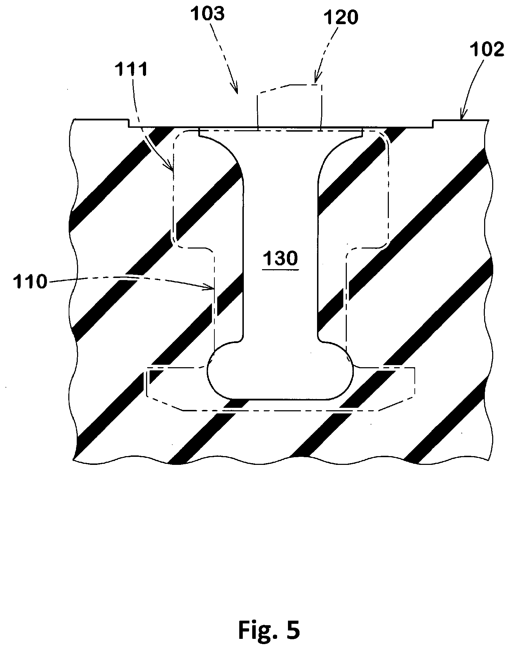

FIG. 5 is a cross-sectional view of the tread portion 102 to which the stud 103 has not been mounted. As shown in FIG. 5, the tread portion 102 has a hole 130 in which the stud 103 is mounted. The hole 130 is, for example, a circular opening in a planar view. The hole 130 has, for example, inner diameters increased on the outer side and the inner side in the tire radial direction, and has an inner diameter reduced therebetween. This shape corresponds to the shape of the body 110 of the stud 103 indicated by an imaginary line. Furthermore, the hole 130 has an inner diameter less than the outer diameter of the stud 103 over almost the entirety of the hole 130.

When the stud 103 is mounted into the hole 130, the stud 103 is pushed into the hole 130 at a high force. Thus, the stud 103 enters the hole 130 while pressing and widening the hole 130, and is mounted such that the body 110 including the top flange 111 is disposed in the hole 130 and the pin portion 120 is disposed outside the hole 130. The hole 130 is elastically deformed so as to be brought into almost close contact with the body 110 of the stud 103, and firmly holds the stud 103. The rubber retracted by the stud 103 expands into the groove 108 side around the block 105.

Returning to FIG. 1, in the present embodiment, the stud 103 is mounted to the block 105 such that the tapered portion 111A of the top flange 111 is oriented in the same direction as the corner portion 106 of the block 105 in order to improve on-snow performance of the studdable tire 101. Unless the tapered portion 111A and the corner portion 106 are oriented in the same direction, the rubber of the block 105 greatly expands locally into the grooves 108 around the block 105 when the stud 103 is mounted to the block 105, and this reduces the groove volume and the reduction of the groove volume causes reduction of a snow column shear force.

Meanwhile, as in the present embodiment, when the corner portion 106 of the block 105 and the tapered portion 111A of the top flange 111 are oriented in the same direction, the rubber of the corner portion 106 of the block 105 is inhibited from greatly expanding locally into the grooves 108 around the block 105 also when the stud 103 is mounted to the block 105.

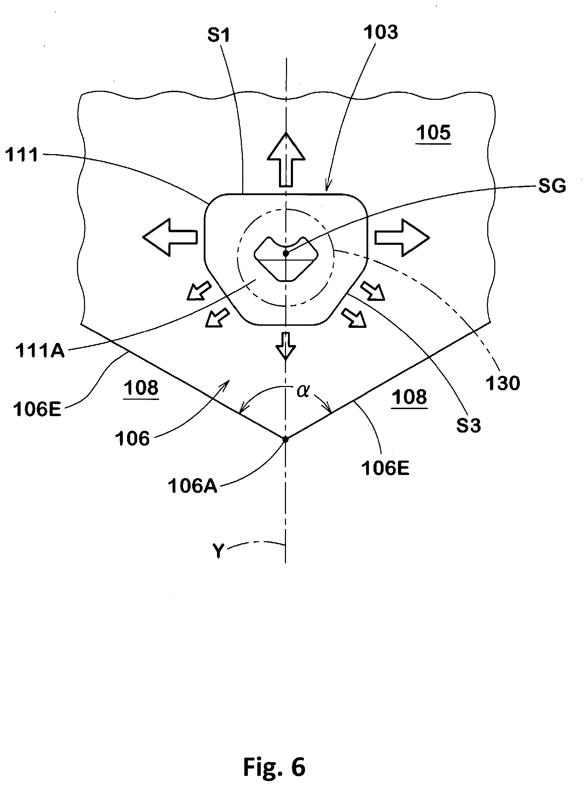

In FIG. 6, stress generated around the hole 130 by mounting the stud 103 is schematically indicated by arrows. As is apparent from FIG. 6, in the present embodiment, stress is high near the first side S1 of the top flange 111 whereas stress is relatively low between the hole 130 and an end portion 106A of the corner portion 106. As a result, the rubber of the corner portion 106 is inhibited from greatly expanding locally into the grooves 108 around the corner portion 106, so that reduction of a snow column shear force can be inhibited. Therefore, the tire 101 of the present embodiment inhibits reduction of a snow column shear force and maintains excellent on-snow performance also when the stud 103 is mounted.

As shown in FIG. 1, the tapered portion 111A of the top flange 111 is preferably disposed so as to project forward in the rotation direction R, similarly to the corner portion 106 of the block 105.

FIG. 6 is an enlarged plan view of the corner portion 106 of the block 105. As shown in FIG. 6, in a preferable mode, the top flange 111 of the stud 103 is disposed so as to intersect a line Y, in the tire circumferential direction, which passes through the end portion 106A of the corner portion 106 of the block 105 in a planar view of the block 105. Thus, expansion of rubber is dispersed onto both the sides of the corner portion 106 in a well-balanced manner when the stud 103 is mounted, and expansion into the grooves 108 can be further reduced.

In a planar view of the tread portion 102 (FIG. 6), an area centroid SG of the top flange 111 of the stud 103 is disposed so as to be distant from the end portion 106A of the corner portion 106 by 15 mm or less in the tire circumferential direction. Similarly, in a preferable mode, in the planar view of the tread portion 102 (FIG. 6), the area centroid SG of the top flange 111 of the stud 103 may be disposed so as to be distant from the end portion 106A of the corner portion 106 by 5 mm or less in the tire axial direction. Thus, expansion of rubber is dispersed onto both the sides of the corner portion 106 in a more well-balanced manner when the stud 103 is mounted, and expansion into the grooves 108 can be further reduced. In this case, needless to say, the stud 103 is disposed such that the peripheral portion of the stud 103 is covered with rubber without expanding from the block 105.

In a preferable mode, in a planar view of the tread portion 102 (FIG. 6), an angle between the diagonal side S3 of the tapered portion 111A of the stud 103 and a block edge 106E of the corner portion 106 is, for example, not greater than 20 degrees, preferably not greater than 15 degrees, more preferably not greater than 10 degrees, and even more preferably 0 degrees (that is, the diagonal side S3 and the block edge 106E are parallel to each other). Thus, expansion of rubber is dispersed onto both the sides of the corner portion 106 in a more well-balanced manner when the stud 103 is mounted, and expansion into the grooves 108 can be further reduced.

As shown in FIG. 1, the block 105 to which the stud 103 is mounted may be a crown block. The crown block is disposed in a crown region that includes a tire equator C at the center of the crown region and extends over a distance corresponding to 40% of a tread width (described below). The crown block may be disposed such that the position of the center of gravity of the tread surface of the crown block is in the crown region, and a part of the crown block may be outside the crown region. A relatively high contact pressure acts on the crown block during straight running. Therefore, when the above-described relationship with the stud 103 is applied to the crown block, a snow column shear force is more effectively exerted during straight running, and straight running and braking performance on snow are further improved.

The block 105 may be a shoulder block. The shoulder block 105 is disposed in a shoulder region that extends from a tread end (described below) over a distance corresponding to 30% of the tread width. The shoulder block may be disposed such that the position of the center of gravity of the tread surface of the shoulder block is in the shoulder region, and a part of the shoulder block may be outside the shoulder region. A high contact pressure acts on the shoulder block during turning. Therefore, when the above-described relationship with the stud 103 is applied to the shoulder block, a snow column shear force is more effectively exerted during turning and turning performance on snow is further improved.

### [Embodiment of tread portion]

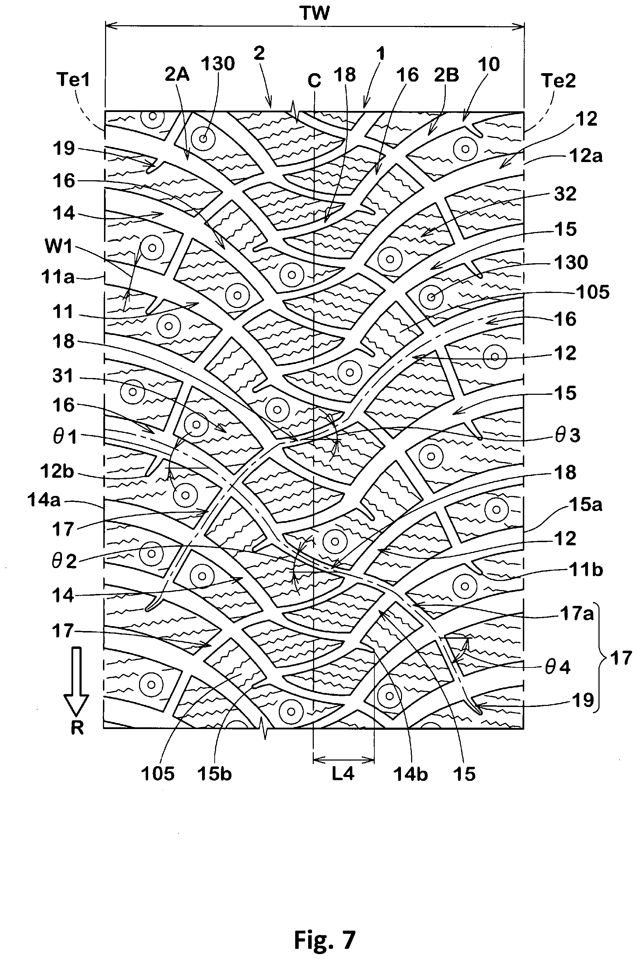

FIG. 7 shows a tire 1 as a preferable embodiment of the tire 101. FIG. 7 is a development of a tread portion 2 of the tire 1. The tire 1 includes the tread portion 2 defined by a first tread end Te1 and a second tread end Te2.

The tread portion 2 includes, for example, a first tread portion 2A between the tire equator C and the first tread end Te1, and a second tread portion 2B between the tire equator C and the second tread end Te2. The first tread portion 2A and the second tread portion 2B are substantially line-symmetric except that the first tread portion 2A and the second tread portion 2B are displaced in the tire circumferential direction. Therefore, each component of the first tread portion 2A can be applied to the second tread portion 2B.

The first tread end Te1 and the second tread end Te2 are tire-axially outermost ground contact positions in the case of the tire 1 in a normal state being in contact with a plane at a camber angle of 0° under a normal load when the tire 1 is a pneumatic tire.

The "normal state" represents a state in which the tire 1 is mounted on a normal rim at a normal internal pressure, and no load is applied to the tire 1. In the description herein, unless otherwise specified, dimensions of components of the tire 1, and the like are represented as values measured in the normal state.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

The "normal load" represents a load that is defined by a standard, in a standard system including the standard with which the tire complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The tread portion 2 has a plurality of tilted grooves 10 that extend diagonally relative to the tire axial direction. The tilted grooves 10 include a plurality of first tilted grooves 11 and a plurality of second tilted grooves 12.

Each first tilted groove 11 extends, from an open end 11a that connects to the first tread end Te1, beyond the tire equator C, and has a disconnecting end 11b before the second tread end Te2.

Each second tilted groove 12 extends, from an open end 12a that connects to the second tread end Te2, beyond the tire equator C, and has a disconnecting end 12b before the first tread end Te1 The second tilted grooves 12 have substantially the same structure as the first tilted grooves 11. Therefore, unless otherwise specified, the structure of the first tilted groove 11 can be applied to the second tilted groove 12.

The first tilted grooves 11 and the second tilted grooves 12 extend across the tire equator C, and not only exhibit high drainage performance during running on a wet road but also form snow columns elongated in the tire axial direction during running on a snow road, to generate a high snow column shear force.

The tilted grooves 10 may include, for example, tilted sub-grooves having lengths, in the tire axial direction, which are less than each of the first tilted grooves 11 and the second tilted grooves 12.

The tilted sub-grooves include, for example, a plurality of first tilted sub-grooves 14 and/or a plurality of second tilted sub-grooves 15.

For example, each first tilted sub-groove 14 extends, from an open end 14a that connects to the first tread end Te1, beyond the tire equator C, and has a disconnecting end 14b at a position closer to the tire equator C than the disconnecting end 1 1b of the first tilted groove 11 is. In the present embodiment, in the first tread portion 2A, the first tilted grooves 11 and the first tilted sub-grooves 14 alternate in the tire circumferential direction.

For example, each second tilted sub-groove 15 extends, from an open end 15a that connects to the second tread end Te2, beyond the tire equator C, and has a disconnecting end 15b at a position closer to the tire equator C than the disconnecting end 12b of the second tilted groove 12 is. In the present embodiment, in the second tread portion 2B, the second tilted grooves 12 and the second tilted sub-grooves 15 alternate in the tire circumferential direction.

In a preferable mode, each tilted groove 10 is tilted forward in the rotation direction R from the tread end Te1, Te2 toward the tire equator C.

For example, a groove width W1 of the tilted groove 10 is preferably 2.0% to 6.0% of a tread width TW. For example, preferably, the groove width W1 is gradually reduced from the open end side toward the disconnecting end. The tread width TW is a distance, in the tire axial direction, from the first tread end Te1 to the second tread end Te2 in the normal state.

For example, a depth of the tilted groove 10 is 6.0 to 12.0 mm and preferably 8.0 to 10.0 mm in the case of the tire for a passenger car.

Each of the first tilted groove 11 and the second tilted groove 12 includes a first steeply-tilted portion 16, on the open end side, which is tilted relative to the tire axial direction, a second steeply-tilted portion 17, on the disconnecting end side, which is tilted relative to the tire axial direction, and a gently-tilted portion 18 which is tilted relative to the tire axial direction between the first steeply-tilted portion 16 and the second steeply-tilted portion 17.

The gently-tilted portion 18 extends at an angle that is relatively close to the angle of the tire axial direction. A high contact pressure acts on the gently-tilted portion 18 during straight running. Therefore, the gently-tilted portion 18 allows a high snow column shear force to be generated in the tire circumferential direction during straight running on a snow road.

Meanwhile, the first steeply-tilted portion 16 and the second steeply-tilted portion 17 each extend at an angle that is relatively close to the angle of the tire circumferential direction. A contact pressure that acts on the first steeply-tilted portion 16 and the second steeply-tilted portion 17 is high during turning. Therefore, the first steeply-tilted portion 16 and the second steeply-tilted portion 17 each allow a high snow column shear force to be generated in the tire axial direction during turning on a snow road, and consequently contribute to improvement of turning performance on a snow road.

In the first tilted grooves 11 and the second tilted grooves 12, the gently-tilted portion 18 is disposed between the first steeply-tilted portion 16 and the second steeply-tilted portion 17 each of which has excellent drainage performance. This contributes to improvement of on-snow performance while minimizing reduction of drainage performance in the gently-tilted portion 18.

The second steeply-tilted portion 17 may include a portion in which an angle relative to the tire circumferential direction is gradually reduced toward the disconnecting end. The second steeply-tilted portion 17 having such a structure promotes guiding of water in the tilted groove 10 toward the disconnecting end or the open end by utilizing rotation of the tire. Therefore, the tilted grooves 10 can also exhibit excellent drainage performance.

For example, each of the first tilted grooves 11 preferably intersects two or more of the tilted grooves 10 between the tire equator C and the second tread end Te2. For example, each of the first tilted grooves 11 more preferably intersects three or more of the tilted grooves 10 and even more preferably intersects four or more of the tilted grooves 10 between the tire equator C and the second tread end Te2. Thus, a plurality of snow columns can be formed in portions at which the first tilted groove 11 and the other tilted grooves 10 intersect each other during running on a snow road, and a higher snow column shear force can be obtained.

From the same viewpoint, for example, each of the second tilted grooves 12 preferably intersects two or more of the tilted grooves 10 between the tire equator C and the first tread end Te1 For example, each of the second tilted grooves 12 more preferably intersects three or more of the tilted grooves 10 and even more preferably intersects four or more of the tilted grooves 10 between the tire equator C and the first tread end Te1

In the present embodiment, all the intersection portions at which the tilted grooves 10 intersect each other are formed as crossings. However, the present invention is not limited thereto. Any of the intersection portions may be trifurcated.

The first steeply-tilted portion 16 of the first tilted groove 11 extends, for example, from the open end 11a to a portion before the tire equator C. In the present embodiment, for example, the first steeply-tilted portion 16 extends across the center position of the first tread portion 2A in the tire axial direction.

An angle θ1 of the first steeply-tilted portion 16 relative to the tire axial direction is, for example, 15 to 70°. For example, the angle of the first steeply-tilted portion 16 relative to the tire axial direction is gradually increased from the open end 11a side toward the tire equator C.

For example, the first steeply-tilted portion 16 is preferably curved so as to project toward one side in the tire circumferential direction. For example, the first steeply-tilted portion 16 may be curved so as to project rearward in the rotation direction R. The first steeply-tilted portion 16 having such a structure forms a snow column that is curved into an arc shape during running on a snow road. Such a snow column exerts a high snow column shear force in the forward direction of the rotation direction R and contributes to improvement of braking performance on a snow road.

For example, the gently-tilted portion 18 extends across the tire equator C. For example, the end portion of the gently-tilted portion 18 on the first tread end Te1 side may be disposed closer to the tire equator C than the center position of the first tread portion 2A in the tire axial direction is. Similarly, for example, the end portion of the gently-tilted portion 18 on the second tread end Te2 side may be disposed closer to the tire equator C than the center position of the second tread portion 2B in the tire axial direction is.

An angle θ2 of the gently-tilted portion 18 relative to the tire axial direction is less than the greatest angle of the first steeply-tilted portion 16 relative to the tire axial direction. For example, the angle θ2 of the gently-tilted portion 18 is 5 to 30°.

For example, the angle θ2 of the gently-tilted portion 18 of the first tilted groove 11 relative to the tire axial direction is gradually reduced toward the second tread end Te2. Similarly, an angle θ3 of the gently-tilted portion 18 of the second tilted groove 12 relative to the tire axial direction is gradually reduced toward the first tread end Te1. The gently-tilted portion 18 having such a structure allows water thereinside to be easily moved to one side in the tire axial direction during running on a wet road.

For example, the gently-tilted portion 18 is preferably curved so as to project in a direction opposite to the direction in which the first steeply-tilted portion 16 projects. Specifically, the gently-tilted portion 18 may be curved so as to project forward in the rotation direction R. The gently-tilted portion 18 having such a structure forms a snow column which is curved into an arc shape in the direction opposite to the direction of the snow column formed by the first steeply-tilted portion 16 during running on a snow road, so that traction performance on a snow road can be effectively improved.

The second steeply-tilted portion 17 is disposed between the tire equator C and the second tread end Te2. In the present embodiment, for example, the second steeply-tilted portion 17 extends across the center position of the second tread portion 2B in the tire axial direction. In the present embodiment, for example, the second steeply-tilted portion 17 includes a body portion 17a having an angle, relative to the tire circumferential direction, which is gradually reduced from the gently-tilted portion 18 toward the disconnecting end 1 1b, and an end portion 19 that connects to the body portion 17a. For example, the length of the body portion 17a is preferably not less than 50% of the entire length of the second steeply-tilted portion 17 and more preferably not less than 70% thereof. At least two of the tilted grooves 10 intersect the body portion 17a.

For example, the second steeply-tilted portion 17 is tilted relative to the tire axial direction at an angle θ4 that is greater than the angle of the gently-tilted portion 18. The angle θ4 of the second steeply-tilted portion 17 relative to the tire axial direction is, for example, 40 to 70°.

For example, the body portion 17a of the second steeply-tilted portion 17 is preferably curved so as to project in the same direction as the first steeply-tilted portion 16. The second steeply-tilted portion 17 having such a structure can allow a high snow column shear force to be generated in the same direction as the first steeply-tilted portion 16.

For example, preferably, an angle of the end portion 19 of the second steeply-tilted portion 17 relative to the tire circumferential direction is gradually increased toward the disconnecting end 11b.

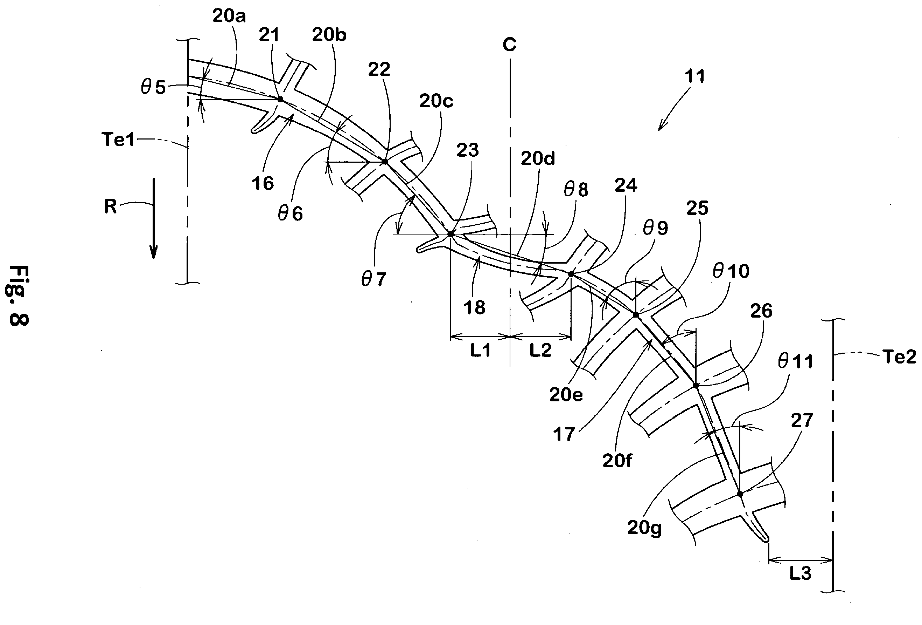

FIG. 8 is an enlarged view of the outline of the first tilted groove 11 and illustrates in more detail the structures of the first tilted groove 11 and the second tilted groove 12.

As shown in FIG. 8, each first tilted groove 11 may include a plurality of intersection portions at which the first tilted groove 11 intersects the other tilted grooves 10. Each intersection portion has an intersection point at which the groove center line of the first tilted groove 11 and the groove center line of the other tilted groove 10 intersect each other. In the present embodiment, for example, the first tilted groove 11 includes a first intersection point 21, a second intersection point 22, and a third intersection point 23 in a region between the first tread end Te1 and the tire equator C.

The first intersection point 21 is an intersection point in the intersection portion which is closest to the first tread end Te1 The second intersection point 22 is an intersection point, in the intersection portion, which is adjacent to the first intersection point 21 and is closer to the second tread end Te2 than the first intersection point 21 is. The third intersection point 23 is an intersection point, in the intersection portion, which is adjacent to the second intersection point 22 and is closer to the second tread end Te2 than the second intersection point 22 is.

For example, the first tilted groove 11 includes a fourth intersection point 24, a fifth intersection point 25, a sixth intersection point 26, and a seventh intersection point 27 in a region between the second tread end Te2 and the tire equator C.

The fourth intersection point 24 is an intersection point, in the intersection portion, which is adjacent to the third intersection point 23 and is closer to the second tread end Te2 than the third intersection point 23 is. The fifth intersection point 25 is an intersection point, in the intersection portion, which is adjacent to the fourth intersection point 24 and is closer to the second tread end Te2 than the fourth intersection point 24 is. The sixth intersection point 26 is an intersection point, in the intersection portion, which is adjacent to the fifth intersection point 25 and is closer to the second tread end Te2 than the fifth intersection point 25 is. The seventh intersection point 27 is an intersection point, in the intersection portion, which is adjacent to the sixth intersection point 26 and is closer to the second tread end Te2 than the sixth intersection point 26 is, and the seventh intersection point 27 is formed to be closest to the second tread end Te2.

In the present embodiment, the first steeply-tilted portion 16 is formed between the open end 11a and the third intersection point 23. For example, an angle θ5 of a first straight line 20a relative to the tire axial direction is preferably 10 to 20°. The first straight line 20a is a line that extends, from an intersection point at which the first tread end Te1 and the groove center line of the first tilted groove 11 intersect each other, to the first intersection point 21. For example, an angle θ6 of a second straight line 20b relative to the tire axial direction is preferably 20 to 45°. The second straight line 20b is a line that extends from the first intersection point 21 to the second intersection point 22. For example, an angle θ7 of a third straight line 20c relative to the tire axial direction is preferably 40 to 55°. The third straight line 20c is a line that extends from the second intersection point 22 to the third intersection point 23.

For example, a distance L1 in the tire axial direction from the tire equator C to the third intersection point 23 is preferably 0.05 to 0.15 times the tread width TW.

The first tilted grooves 11 as described above contribute to well-balanced improvement of on-snow-road performance and steering stability on a dry road surface.

In the present embodiment, the gently-tilted portion 18 is formed between the third intersection point 23 and the fourth intersection point 24. For example, an angle θ8 of a fourth straight line 20d relative to the tire axial direction is preferably 15 to 25°. The fourth straight line 20d is a line that extends from the third intersection point 23 to the fourth intersection point 24.

For example, a distance L2 in the tire axial direction from the tire equator C to the fourth intersection point 24 is preferably 0.05 to 0.15 times the tread width TW.

In the present embodiment, the second steeply-tilted portion 17 is formed between the fourth intersection point 24 and the seventh intersection point 27. For example, an angle θ9 of a fifth straight line 20e relative to the tire circumferential direction is preferably 50 to 60°. The fifth straight line 20e is a line that extends from the fourth intersection point 24 to the fifth intersection point 25.

For example, an angle θ10 of a sixth straight line 20f relative to the tire circumferential direction is preferably 35 to 50°. The sixth straight line 20f is a line that extends from the fifth intersection point 25 to the sixth intersection point 26.

For example, an angle θ11 of a seventh straight line 20g relative to the tire circumferential direction is preferably 20 to 30°. The seventh straight line 20g is a line that extends from the sixth intersection point 26 to the seventh intersection point 27.

For example, a distance L3 in the tire axial direction from the second tread end Te2 to the disconnecting end 11b is preferably 0.05 to 0.15 times the tread width TW.

The first tilted groove 11 as described above can allow on-snow-road performance and wet performance to be enhanced while stiffness near the second tread end Te2 is maintained.

As shown in FIG. 7, the first tilted sub-groove 14 includes the first steeply-tilted portion 16 and the gently-tilted portion 18, similarly to the first tilted groove 11. The structures of the first steeply-tilted portion 16 and the gently-tilted portion 18 of the first tilted groove 11 described above can be applied to the first steeply-tilted portion 16 and the gently-tilted portion 18 of the first tilted sub-groove 14.

For example, a distance L4 in the tire axial direction from the tire equator C to the disconnecting end 14b of the first tilted sub-groove 14 is preferably 0.30 to 0.40 times the tread width TW.

The second tilted sub-groove 15 has the first steeply-tilted portion 16 and the gently-tilted portion 18, similarly to the second tilted groove 12. The structures of the first steeply-tilted portion 16 and the gently-tilted portion 18 of the second tilted groove 12 described above can be applied to the first steeply-tilted portion 16 and the gently-tilted portion 18 of the second tilted sub-groove 15. Furthermore, the first tilted sub-groove 14 and the second tilted sub-groove 15 are substantially line-symmetric except that the first tilted sub-groove 14 and the second tilted sub-groove 15 are displaced in the tire circumferential direction. Therefore, the structure of the first tilted sub-groove 14 described above can also be applied to the second tilted sub-groove 15.

By the tread portion 2 having the tilted grooves 10 described above, the tread portion 2 has the plurality of blocks 105 formed therein.

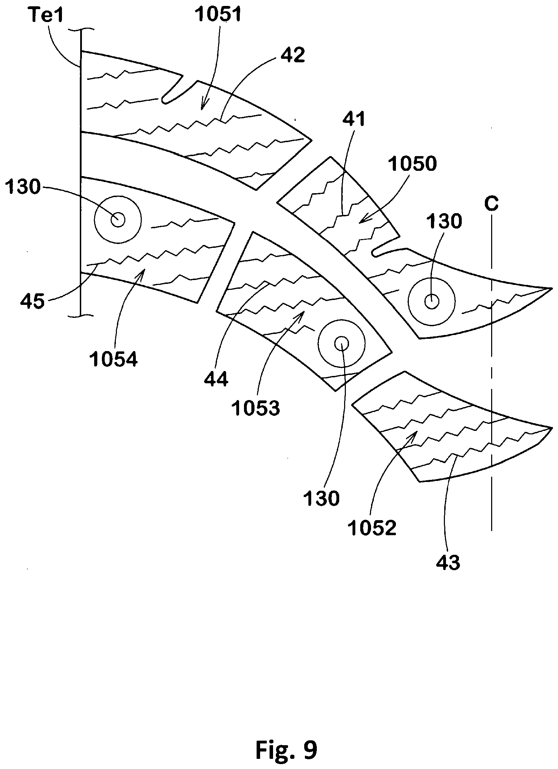

FIG. 9 is an enlarged view of a main portion of the first tread portion 2A. As shown in FIG. 9, the first tread portion 2A is divided into five kinds of blocks 1050, 1051, 1052, 1053, and 1054. For example, each block includes zigzag sipes. In the description herein, the sipe represents a cut having a width of less than 1.5 mm.

The block 1050 includes first sipes 41. For example, each first sipe 41 is preferably tilted in the direction opposite to the direction in which the first tilted groove 11 is tilted.

The block 1051 includes second sipes 42. For example, although each second sipe 42 is tilted in the same direction as the first sipe 41, an angle of the second sipe 42 relative to the tire axial direction is less than an angle of the first sipe 41 relative thereto. The first sipes 41 and the second sipes 42 having such structures allow, with their edges, enhancement of a frictional force in the direction different from the first tilted grooves 11.

The block 1052 includes third sipes 43. For example, although each third sipe 43 is tilted in the same direction as the first sipe 41, the third sipe 43 extends at an angle, relative to the tire axial direction, which is less than the first sipe 41.

The block 1053 includes fourth sipes 44. The block 1054 includes fifth sipes 45. For example, the fourth sipes 44 and the fifth sipes 45 are tilted in the same direction as the second sipes 42. In the present embodiment, for example, the fourth sipes 44 and the fifth sipes 45 extend along the second sipes 42.

The blocks 1050, 1053, and 1054 each have the hole 130 in which the stud 103 is mounted. A person skilled in the art may understand that the block 1050 has almost the same structure as the block 105 illustrated on the left side of FIG. 1. In a preferable mode, no grooves and sipes are disposed in a peripheral region that extends from the center of the hole 130 over a distance of 8 mm or less. Thus, occurrence of cracks around the hole 130 is inhibited.

In the tire 1 of the present embodiment, for example, a land ratio Lr in the tread portion 2 is preferably 55% to 70%. Thus, steering stability on a dry road surface and on-snow-road performance are improved in a well-balanced manner. In the description herein, the "land ratio" represents a ratio Sb/Sa of the total actual contact area Sb to the entire area Sa of an imaginary contact surface obtained by filling all the grooves and sipes.

From the same viewpoint, for example, a rubber hardness Ht of tread rubber of the tread portion 2 is preferably 45 to 65°. In the description herein, the "rubber hardness" represents a hardness measured with a type A durometer at 23°C in compliance with JIS-K6253.

Although the tire according to one embodiment of the present invention has been described above in detail, the present invention is not limited to the above-described specific embodiment, and various modifications can be made to implement the present invention as defined by the appended claims.

### [Examples]

Two types of studdable tires were produced by studs 1 and 2 described below being disposed on tires having the basic pattern shown in FIG. 7. A professional driver evaluated the two types of studdable tires for running performance on ice and snow.

### <Specifications of Stud 1 (product for example)>

Length L1 of the first side S1 of the top flange: 6 mm
Length L2 of the second side S2 of the top flange: 2 mm
Distance between the first side and the second side: 4 mm
Angle of the tapered portion: 120 degrees

The tapered portion was oriented in the direction shown in FIG. 1.

### <Specifications of Stud 2 (product for comparative example)>

The top flange had a square outline shape (without a tapered portion) having the same surface area as that of the Stud 1, and the sides are aligned in the tire circumferential direction and the tire axial direction.

For both the tires, preferable results for the on-ice performance were obtained by the effects of the studs. Meanwhile, for on-snow performance, the product for the example was superior in steering response and traction performance as compared with the product for the comparative example. Specifically, the professional driver made the sensory evaluation for running on snow with the full marks being 10, and the result indicated that performance of the product for the example was improved by about 10% or more as compared with the product for the comparative example.

## Claims

1. A studdable tire (1, 101) comprising:
a stud (103); and
a tread portion (2, 102) to which the stud (103) is mounted, wherein
the tread portion (2, 102) has a designated rotation direction (R),
the tread portion (2, 102) includes a plurality of blocks (105),
the plurality of blocks (105) each include a corner portion (106) that projects forward in the rotation direction (R),
the stud (103) is mounted to at least one of the plurality of blocks (105),
the stud (103) includes a body (110) embedded in the block (105) and a pin portion (120) that projects from the body (110) in a tire radial direction,
the body (110) has a top flange (111) formed in an outer side portion in the tire radial direction,
the top flange (111) includes a tapered portion (111A) in a planar view, and
the stud (103) is mounted to the block (105) such that the tapered portion (111A) and the corner portion (106) are oriented in the same direction,
**characterized in that**, in a planar view of the tread portion (2, 102), an area centroid (SG) of the top flange (111) of the stud (103) is disposed so as to be distant from an end portion (106A) of the corner portion (106) by 15 mm or less in a tire circumferential direction.

2. The studdable tire (1, 101) according to claim 1, wherein
the top flange (111) includes a first side (S1) that linearly extends in a planar view, and
the tapered portion (111A) has a length, along the first side (S 1), which is reduced in a direction orthogonal to the first side (S1).

3. The studdable tire (1, 101) according to claim 1 or 2, wherein the corner portion (106) has an obtuse angle.

4. The studdable tire (1, 101) according to any one of claims 1 to 3, wherein the block (105) is a crown block disposed in a region that includes a tire equator (C) at a center of the region and that extends over a distance corresponding to 40% of a tread width (TW), wherein the tread width (TW) is a distance, in the tire axial direction, from the first tread end (Te1) to the second tread end (Te2) in the normal state being in contact with a plane at a camber angle of 0° under a normal load when the tire (1) is a pneumatic tire and wherein the "normal state" represents a state in which the tire (1) is mounted on a normal rim at a normal internal pressure, and no load is applied to the tire (1).

5. The studdable tire (1, 101) according to any one of claims 1 to 3, wherein the block (105) is a shoulder block disposed in a region that extends from a tread end (Te1, Te2) over a distance corresponding to 30% of the tread width (TW), wherein the tread width (TW) is a distance, in the tire axial direction, from the first tread end (Te1) to the second tread end (Te2) in the normal state being in contact with a plane at a camber angle of 0° under a normal load when the tire (1) is a pneumatic tire and wherein the "normal state" represents a state in which the tire (1) is mounted on a normal rim at a normal internal pressure, and no load is applied to the tire (1).

6. The studdable tire (1, 101) according to any one of claims 1 to 5, wherein
the tread portion (2, 102) includes a first tread end (Te1) and a second tread end (Te2),
the tread portion (2, 102) has a plurality of tilted grooves (10) formed therein,
the plurality of tilted grooves (10) include
a first tilted groove (11) which extends, from an open end (11a) that connects to the first tread end (Te1), beyond the tire equator (C), and has a disconnecting end (11b) before the second tread end (Te2), and
a second tilted groove (12) which extends, from an open end (12a) that connects to the second tread end (Te2), beyond the tire equator (C), and has a disconnecting end (12b) before the first tread end (Te1), and
the first tilted groove (11) and the second tilted groove (12) each include
a first steeply-tilted portion (16), on the open end (11a, 12a) side, which is tilted relative to a tire axial direction,
a second steeply-tilted portion (17), on the disconnecting end (11b, 12b) side, which is tilted relative to the tire axial direction, and
a gently-tilted portion (18) which is tilted relative to the tire axial direction between the first steeply-tilted portion (16) and the second steeply-tilted portion (17).

7. The studdable tire (1, 101) according to claim 6, wherein the second steeply-tilted portion (17) has a portion having an angle, relative to a tire circumferential direction, which is gradually reduced toward the disconnecting end (11b, 12b).

8. The studdable tire (1, 101) according to claim 6 or 7, wherein
the tread portion (2, 102) includes a plurality of the first tilted grooves (11) and a plurality of the second tilted grooves (12), and
each of the plurality of the first tilted grooves (11) intersects two or more of the tilted grooves (10) between the tire equator (C) and the second tread end (Te2).

9. The studdable tire (1, 101) according to any one of claims 6 to 8, wherein each of the plurality of the second tilted grooves (12) intersects two or more of the tilted grooves (10) between the tire equator (C) and the first tread end (Te1).

10. The studdable tire (1, 101) according to any one of claims 6 to 9, wherein
the gently-tilted portion (18) of the first tilted groove (11) has an angle, relative to the tire axial direction, which is gradually reduced toward the second tread end (Te2), and
the gently-tilted portion (18) of the second tilted groove (12) has an angle, relative to the tire axial direction, which is gradually reduced toward the first tread end (Te1).

11. The studdable tire (1, 101) according to any one of claims 6 to 10, wherein
the first steeply-tilted portion (16) is curved so as to project toward one side in the tire circumferential direction, and
the gently-tilted portion (18) is curved so as to project toward the other side in the tire circumferential direction.

12. The studdable tire (1, 101) according to any one of claims 1 to 11, wherein
in a planar view of the tread portion (2, 102),
an area centroid (SG) of the top flange (111) of the stud (103) is disposed so as to be distant from the end portion (106A) of the corner portion (106) by 5 mm or less in the tire axial direction.

## Patentansprüche

1. Mit Spikes bestückbarer Reifen (1, 101), umfassend:
einen Spike (103); und
einen Laufflächenabschnitt (2, 102), an dem der Spike (103) befestigt ist, wobei
der Laufflächenabschnitt (2, 102) eine vorgegebene Drehrichtung (R) aufweist,
der Laufflächenabschnitt (2, 102) eine Vielzahl von Blöcken (105) umfasst,
die Vielzahl von Blöcken (105) jeweils einen Eckabschnitt (106) umfasst, der in der Drehrichtung (R) nach vorne vorsteht,
der Spike (103) an mindestens einem der Vielzahl von Blöcken (105) befestigt ist,
der Spike (103) einen Körper (110), der in den Block (105) eingebettet ist, und einen Stiftabschnitt (120) aufweist, der vom Körper (110) in einer Reifenradialrichtung vorsteht,
der Körper (110) einen oberen Flansch (111) aufweist, der in einem äußeren Seitenabschnitt in der Reifenradialrichtung gebildet ist,
der obere Flansch (111) in einer planaren Ansicht einen verjüngten Abschnitt (111A) aufweist, und
der Spike (103) so an dem Block (105) montiert ist, dass der verjüngte Abschnitt (111A) und der Eckabschnitt (106) in die gleiche Richtung ausgerichtet sind,
**dadurch gekennzeichnet, dass** in einer planaren Ansicht des Laufflächenabschnitts (2, 102) ein Flächenschwerpunkt (SG) des oberen Flansches (111) des Spikes (103) so angeordnet ist, dass er von einem Endabschnitt (106A) des Eckabschnitts (106) 15 mm oder weniger in einer Reifenumfangsrichtung beabstandet ist.

2. Mit Spikes bestückbarer Reifen (1, 101) nach Anspruch 1, wobei
der obere Flansch (111) eine erste Seite (S1) aufweist, die sich in einer planaren Ansicht linear erstreckt, und
der verjüngte Abschnitt (111A) entlang der ersten Seite (S1) eine Länge aufweist, die in einer Richtung orthogonal zu der ersten Seite (S1) reduziert ist.

3. Mit Spikes bestückbarer Reifen (1, 101) nach Anspruch 1 oder 2, wobei der Eckabschnitt (106) einen stumpfen Winkel aufweist.

4. Mit Spikes bestückbarer Reifen (1, 101) nach einem der Ansprüche 1 bis 3, wobei der Block (105) ein Kronenblock ist, der in einem Bereich angeordnet ist, der einen Reifenäquator (C) in der Mitte des Bereichs einschließt und der sich über eine Distanz erstreckt, die 40% einer Laufflächenbreite (TW) entspricht, wobei die Laufflächenbreite (TW) eine Distanz in der Reifenaxialrichtung von dem ersten Laufflächenende (Te1) zu dem zweiten Laufflächenende (Te2) in dem normalen Zustand ist, in dem er in Kontakt mit einer Ebene mit einem Sturzwinkel von 0° unter einer normalen Last ist, wenn der Reifen (1) ein Luftreifen ist, und wobei der "normale Zustand" einen Zustand darstellt, in dem der Reifen (1) auf eine normale Felge mit einem normalen Innendruck aufgezogen ist und keine Last auf den Reifen (1) ausgeübt wird.

5. Mit Spikes bestückbarer Reifen (1, 101) nach einem der Ansprüche 1 bis 3, wobei der Block (105) ein Schulterblock ist, der in einem Bereich angeordnet ist, der sich von einem Laufflächenende (Te1, Te2) über eine Distanz erstreckt, die 30% der Laufflächenbreite (TW) entspricht, wobei die Laufflächenbreite (TW) eine Distanz in der Reifenaxialrichtung von dem ersten Laufflächenende (Te1) zu dem zweiten Laufflächenende (Te2) in dem normalen Zustand ist, in dem er in Kontakt mit einer Ebene mit einem Sturzwinkel von 0° unter einer normalen Last ist, wenn der Reifen (1) ein Luftreifen ist, und wobei der "normale Zustand" einen Zustand darstellt, in dem der Reifen (1) auf eine normale Felge mit einem normalen Innendruck aufgezogen ist und keine Last auf den Reifen (1) ausgeübt wird.

6. Mit Spikes bestückbarer Reifen (1, 101) nach einem der Ansprüche 1 bis 5, wobei
der Laufflächenabschnitt (2, 102) ein erstes Laufflächenende (Te1) und ein zweites Laufflächenende (Te2) aufweist,
der Laufflächenabschnitt (2, 102) eine Vielzahl von darin ausgebildeten geneigten Rillen (10) aufweist,
die Vielzahl der geneigten Rillen (10) umfasst
eine erste geneigte Rille (11), die sich von einem offenen Ende (11a), das mit dem ersten Laufflächenende (Te1) verbunden ist, über den Reifenäquator (C) hinaus erstreckt und ein Trennende (11b) vor dem zweiten Laufflächenende (Te2) aufweist, und
eine zweite geneigte Rille (12), die sich von einem offenen Ende (12a), das mit dem zweiten Laufflächenende (Te2) verbunden ist, über den Reifenäquator (C) hinaus erstreckt und ein Trennende (12b) vor dem ersten Laufflächenende (Te1) aufweist, und
die erste geneigte Rille (11) und die zweite geneigte Rille (12) jeweils umfassen
einen ersten, steil geneigten Abschnitt (16) auf der Seite des offenen Endes (11a, 12a), der relativ zu einer Reifenaxialrichtung geneigt ist,
einen zweiten, steil geneigten Abschnitt (17) auf der Seite des Trennendes (11b, 12b), der relativ zu der Reifenaxialrichtung geneigt ist, und
einen sanft geneigten Abschnitt (18), der relativ zu der Reifenaxialrichtung zwischen dem ersten steil geneigten Abschnitt (16) und dem zweiten steil geneigten Abschnitt (17) geneigt ist.

7. Mit Spikes bestückbarer Reifen (1, 101) nach Anspruch 6, wobei der zweite steil geneigte Abschnitt (17) einen Abschnitt mit einem Winkel relativ zu einer Reifenumfangsrichtung aufweist, der in Richtung des Trennendes (11b, 12b) allmählich reduziert ist.

8. Mit Spikes bestückbarer Reifen (1, 101) nach Anspruch 6 oder 7, wobei
der Laufflächenabschnitt (2, 102) eine Vielzahl der ersten geneigten Rillen (11) und eine Vielzahl der zweiten geneigten Rillen (12) aufweist, und
eine jede der Vielzahl der ersten geneigten Rillen (11) zwei oder mehr der geneigten Rillen (10) zwischen dem Reifenäquator (C) und dem zweiten Laufflächenende (Te2) schneidet.

9. Mit Spikes bestückbarer Reifen (1, 101) nach einem der Ansprüche 6 bis 8, wobei eine jede der Vielzahl der zweiten geneigten Rillen (12) zwei oder mehr der geneigten Rillen (10) zwischen dem Reifenäquator (C) und dem ersten Laufflächenende (Te1) schneidet.

10. Mit Spikes bestückbarer Reifen (1, 101) nach einem der Ansprüche 6 bis 9, wobei
der sanft geneigte Abschnitt (18) der ersten geneigten Rille (11) einen Winkel relativ zur Reifenaxialrichtung aufweist, der zum zweiten Laufflächenende (Te2) hin allmählich reduziert ist, und
der sanft geneigte Abschnitt (18) der zweiten geneigten Rille (12) einen Winkel relativ zur Reifenaxialrichtung aufweist, der zum ersten Laufflächenende (Te1) hin allmählich reduziert ist.

11. Mit Spikes bestückbarer Reifen (1, 101) nach einem der Ansprüche 6 bis 10, wobei
der erste steil geneigte Abschnitt (16) so gekrümmt ist, dass er zu einer Seite in der Reifenumfangsrichtung vorsteht, und
der sanft geneigte Abschnitt (18) so gekrümmt ist, dass er zur anderen Seite in Reifenumfangsrichtung vorsteht.

12. Mit Spikes bestückbarer Reifen (1, 101) nach einem der Ansprüche 1 bis 11, wobei in einer planaren Ansicht des Laufflächenabschnitts (2, 102) ein Flächenschwerpunkt (SG) des oberen Flansches (111) des Spikes (103) so angeordnet ist, dass er von dem Endabschnitt (106A) des Eckabschnitts (106) 5 mm oder weniger in der Reifenaxialrichtung beabstandet ist.

## Revendications

1. Pneumatique (1, 101) pouvant être doté de clous, comprenant :
un clou (103) ; et
une portion formant bande de roulement (2, 102) sur laquelle le clou (103) est monté, dans lequel
la portion formant bande de roulement (2, 102) a une direction de rotation (R) par conception,
la portion formant bande de roulement (2, 102) inclut une pluralité de blocs (105),
la pluralité de blocs (105) incluent chacun une portion de coin (106) qui se projette vers l'avant dans la direction de rotation (R),
le clou (103) est monté sur au moins un des blocs parmi la pluralité de blocs (105),
le clou (103) inclut un corps (110) encastré dans le bloc (105) et une portion formant broche (120) qui se projette depuis le corps (110) dans une direction radiale du pneumatique,
le corps (110) a une bride supérieure (111) formée dans une portion latérale extérieure dans la direction radiale du pneumatique,
la bride supérieure (111) inclut une portion effilée (111A) dans une vue en plan, et
le clou (103) est monté sur le bloc (105) de sorte que la portion effilée (111A) et la portion de coin (106) sont orientées dans la même direction,
**caractérisé en ce que**, dans une vue en plan de la portion formant bande de roulement (2, 102), un barycentre de surface (SG) de la bride supérieure (111) du clou (103) est disposé de manière à être distant d'une portion d'extrémité (106A) de la portion de coin (106) à raison de 15 mm ou moins dans une direction circonférentielle du pneumatique.

2. Pneumatique (1, 101) pouvant être doté de clous selon la revendication 1, dans lequel
la bride supérieure (111) inclut un premier côté (S1) qui s'étend linéairement dans une vue en plan, et
la portion effilée (111A) a une longueur, le long du premier côté (S1), qui est réduite dans une direction orthogonale au premier côté (S1).

3. Pneumatique (1, 101) pouvant être doté de clous selon la revendication 1 ou 2, dans lequel la portion de coin (106) a un angle obtus.

4. Pneumatique (1, 101) pouvant être doté de clous selon l'une quelconque des revendications 1 à 3, dans lequel le bloc (105) est un bloc de couronne disposé dans une région qui inclut un équateur de pneumatique (C) au niveau d'un centre de la région et qui s'étend sur une distance correspondant à 40 % d'une largeur de bande de roulement (TW), dans lequel la largeur de bande de roulement (TW) est une distance, dans la direction axiale du pneumatique, depuis la première extrémité de bande de roulement (Te1) jusqu'à la seconde extrémité de bande de roulement (Te2) dans l'état normal, étant en contact avec un plan à un angle de cambrure de 0° sous une charge normale quand le pneumatique (1) est un bandage pneumatique et dans lequel l'« état normal » représente un état dans lequel le pneumatique (1) est monté sur une jante normale à une pression interne normale, et qu'aucune charge n'est appliquée sur le pneumatique (1).

5. Pneumatique (1, 101) pouvant être doté de clous selon l'une quelconque des revendications 1 à 3, dans lequel le bloc (105) est un bloc d'épaulement disposé dans une région qui s'étend depuis une première extrémité de bande de roulement (Te1, Te2) sur une distance correspondant à 30 % de la largeur de bande de roulement (TW), dans lequel la largeur de bande de roulement (TW) est une distance, dans la direction axiale du pneumatique, depuis la première extrémité de bande de roulement (Te1) jusqu'à la seconde extrémité de bande de roulement (Te2) dans l'état normal, étant en contact avec un plan à un angle de cambrure de 0° sous une charge normale quand le pneumatique (1) est un bandage pneumatique et dans lequel l'« état normal » représente un état dans lequel le pneumatique (1) est monté sur une jante normale à une pression interne normale, et qu'aucune charge n'est appliquée sur le pneumatique (1).

6. Pneumatique (1, 101) pouvant être doté de clous selon l'une quelconque des revendications 1 à 5, dans lequel
la portion formant bande de roulement (2, 102) inclut une première extrémité de bande de roulement (Te1) et une seconde extrémité de bande de roulement (Te2),
la portion formant bande de roulement (2, 102) a une pluralité de rainures inclinées (10) formées à l'intérieur,
la pluralité de rainures inclinées (10) incluent
une première rainure inclinée (11) qui s'étend, depuis une extrémité ouverte (11a) qui est connectée à la première extrémité de bande de roulement (Te1), au-delà de l'équateur de pneumatique (C), et qui a une extrémité de déconnexion (11b) avant la seconde extrémité de bande de roulement (Te2), et
une seconde rainure inclinée (12) qui s'étend, depuis une extrémité ouverte (12a) qui est connectée à la seconde extrémité de bande de roulement (Te2), au-delà de l'équateur de pneumatique (C), et qui a une extrémité de déconnexion (12b) avant la première extrémité de bande de roulement (Te1), et
la première rainure inclinée (11) et la seconde rainure inclinée (12) incluent chacune
une première portion fortement inclinée (16), sur le côté de l'extrémité ouverte (11a, 12a), qui est inclinée relativement à une direction axiale du pneumatique,
une seconde portion fortement inclinée (17), sur le côté de l'extrémité de déconnexion (11b, 12b), qui est inclinée relativement à la direction axiale du pneumatique, et
- une portion doucement inclinée (18) qui est inclinée relativement à la direction axiale du pneumatique entre la première portion fortement inclinée (16) et la seconde portion fortement inclinée (17).

7. Pneumatique (1, 101) pouvant être doté de clous selon la revendication 6, dans lequel la seconde portion fortement inclinée (17) a une portion ayant un angle, relativement à une direction circonférentielle du pneumatique, qui est graduellement réduit vers l'extrémité de déconnexion (11b, 12b).

8. Pneumatique (1, 101) pouvant être doté de clous selon la revendication 6 ou 7, dans lequel
la portion formant bande de roulement (2, 102) inclut une pluralité des premières rainures inclinées (11) et une pluralité des secondes rainures inclinées (12), et
chaque rainure parmi la pluralité des premières rainures inclinées (11) recoupe deux ou plusieurs des rainures inclinées (10) entre l'équateur de pneumatique (C) et la seconde extrémité de bande de roulement (Te2).

9. Pneumatique (1, 101) pouvant être doté de clous selon l'une quelconque des revendications 6 à 8, dans lequel chaque rainure parmi la pluralité des secondes rainures inclinées (12) recoupe deux ou plusieurs des rainures inclinées (10) entre l'équateur de pneumatique (C) et la première extrémité de bande de roulement (Te1).

10. Pneumatique (1, 101) pouvant être doté de clous selon l'une quelconque des revendications 6 à 9, dans lequel
la portion doucement inclinée (18) de la première rainure inclinée (11) a un angle, relativement à la direction axiale du pneumatique, qui est graduellement réduit vers la seconde extrémité de bande de roulement (Te2), et
la portion doucement inclinée (18) de la seconde rainure inclinée (12) a un angle, relativement à la direction axiale du pneumatique, qui est graduellement réduit vers la première extrémité de bande de roulement (Te1).

11. Pneumatique (1, 101) pouvant être doté de clous selon l'une quelconque des revendications 6 à 10, dans lequel
la première portion fortement inclinée (16) est incurvée de manière à se projeter vers un côté dans la direction circonférentielle du pneumatique, et la portion doucement inclinée (18) est incurvée de manière à se projeter vers l'autre côté dans la direction circonférentielle du pneumatique.

12. Pneumatique (1, 101) pouvant être doté de clous selon l'une quelconque des revendications 1 à 11, dans lequel
dans une vue en plan de la portion formant bande de roulement (2, 102), un barycentre de surface (SG) de la bride supérieure (111) du clou (103) est disposé de manière à être distant de la portion d'extrémité (106A) de la portion de coin (106) à raison de 5 mm ou moins dans la direction axiale du pneumatique.
